# EUROPEAN PATENT SPECIFICATION

(11) **EP 2 199 184 B1**
(45) Date of publication and mention of the grant of the patent: **15.02.2012**
(21) Application number: 09013921.3
(22) Date of filing: 05.11.2009
(51) Int. Cl.: B62D 5/00, B62D 5/04, B62D 5/065

(54) **Steering control apparatus**
Lenksteuervorrichtung
Appareil de commande de direction

(30) Priority: 16.12.2008 JP 2008319187
(43) Date of publication of application: 23.06.2010
(73) Proprietor: Nissan Motor Co., Ltd., Kanagawa 221-0023 (JP)
(72) Inventor: Osonoi, Tetsuya, Atsugi-shi, Kanagawa 243-0123 (JP); Kubokawa, Noriki, Atsugi-shi, Kanagawa 243-0123 (JP); Chino, Naotaka, Atsugi-shi, Kanagawa 243-0123 (JP); Eguchi, Takaaki, Atsugi-shi, Kanagawa 243-0123 (JP); Shiino, Koutarou, Atsugi-shi, Kanagawa 243-0123 (JP); Yoda, Toshirou, Atsugi-shi, Kanagawa 243-0123 (JP)
(74) Representative: Hager, Thomas Johannes

(56) References cited:
- EP-A1- 1 582 437
- WO-A1-03/055732
- DE-A1- 10 015 922

## Description

### BACKGROUND OF THE INVENTION

The present invention generally relates to a steering control apparatus used in a vehicle. More specifically, the present invention relates to a steering control apparatus that provides two steering force assist devices.

### Background Information

Many vehicles are provided with steering force assist devices to aid the driver in steering the vehicle. One example of a related steering control apparatus used in a vehicle is disclosed in Japanese Laid-Open Patent Publication No. 2004-243988. The apparatus disclosed in this publication uses a redundant steering system having, for example, two independent steering assist units with a pair of pinion shafts each connected to an electric motor. With such a system, if one steering assist unit fails, the steering assist function can still be maintained by the other steering assist unit.

### SUMMARY OF THE INVENTION

It has been discovered that in the steering control apparatus disclosed in the above mentioned publication that the meshing position of the rack and pinion mechanism for one of the steering assist units is usually not appropriate of the other of the steering assist units. In other words, even if a meshing position of a rack and pinion mechanism of one of the units is appropriate, that position may not be an appropriate meshing position for the rack and pinion mechanism of the other unit. More specifically, when the rack and pinion mechanism of one of the units meshes, the pinion shaft of that unit exerts a rotational torque against a rack bar such that the meshing of the rack and pinion mechanism occurs at an appropriate position. Normally, since a meshing gap exists between the pinion teeth and the rack teeth, a torque acting to twist (rotate) the rack bar in a direction of decreasing the meshing gap is exerted when the pinion shaft rotates and transmits a rotational torque to the rack bar. The meshing position of the rack and pinion mechanism of the one unit that results from this twisting of the rack bar is not an appropriate meshing position for the rack and pinion mechanism of the other unit. As a result, the rack and pinion mechanism of the other unit incurs a transmission loss when transmitting a steering assist force.

A steering control apparatus referring to the preamble of claim 1 is known from EP 1 582 437 A1. Such a steering control apparatus is provided that mainly comprises a steering wheel, a rack bar, a pinion shaft, a first steering mechanism, a second steering mechanism, a detection device and a motor control device. The rack bar is operatively connected to a steered wheel to turn the steered wheel. The pinion shaft is operatively connected to the rack bar to form a rack and pinion mechanism. The first steering mechanism includes a first electric motor arranged to apply a rotational torque to the pinion shaft for turning the steered wheel. The second steering mechanism includes a hydraulic power cylinder that applies a thrusting force to the rack bar for turning the steered wheel, and an oil pump fluidly connected to the power cylinder, and a second electric motor that drives the oil pump. The detection device is operatively connected-to the steering wheel such that the detection device detects steering information of the steering wheel. The motor control device controls the first and second electric motors based on a detection signal from the detection device.

The above short comings are overcome by the features of claim 1. The dependent claims contain advantageous embodiments of the present invention.

### BRIEF DESCRIPTION OF THE DRAWINGS

Referring now to the attached drawings which form a part of this original disclosure:

Figure 1 is a simple schematic view of an entire steering control apparatus according to a first embodiment;

Figure 2 is a partial expanded view of the steering control apparatus according to the first embodiment showing a mounting position of a steered wheel angle sensor;

Figure 3 is a graph for comparing a cycle period of an output signal from the steered wheel angle sensor and a cycle period of an output signal from a resolver;

Figure 4 is a simple schematic view of an entire steering control apparatus according to a second embodiment;

Figure 5 is a partial expanded view of a steering control apparatus according to the second embodiment showing a mounting position of a steered wheel angle sensor;

Figure 6 is a simple schematic view of an entire steering control apparatus according to a third embodiment; and

Figure 7 is a simple schematic view of an entire steering control apparatus according to a fourth embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents. In all of the illustrated embodiments, the steering control apparatus is presented as being used in, for example, a rack and pinion steering apparatus of a vehicle.

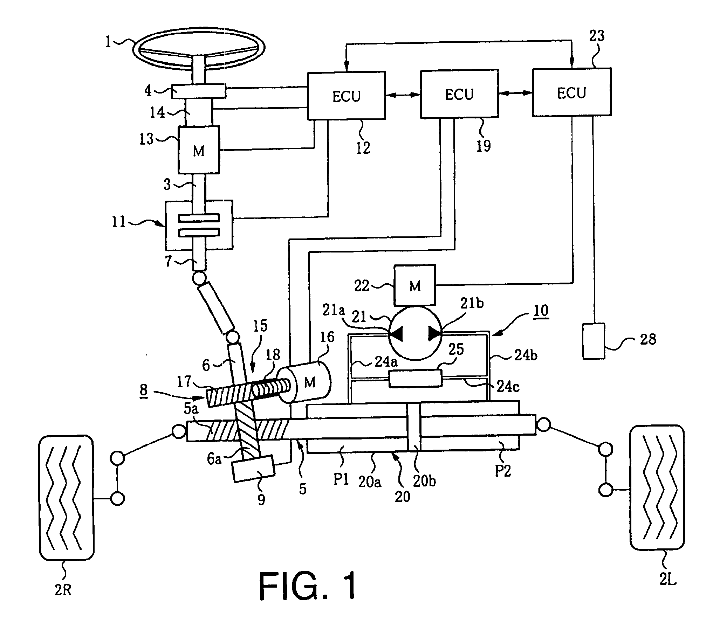

Referring initially to Figures 1 to 3, a steering control apparatus is illustrated in accordance with a first embodiment. As shown in Figure 1, this steering control apparatus is a so-called steer-by-wire steering apparatus in which a steering wheel 1 is separated from a pair of steered wheels 2L and 2R. However, steering control apparatus is not limited to a steer-by-wire system, and can also be used in other types of steering apparatus (electric power steering) that provide steering force assistance. The steering control apparatus mainly includes a first steering shaft 3, a steering angle sensor 4, a rack bar 5, a pinion shaft 6, a second steering shaft 7, a first steering mechanism 8, a steered wheel angle sensor 9, a second steering mechanism 10 and a clutch 11. The pinion shaft 6 and the rack bar 5 form a rack and pinion mechanism.

Thus, the steering control apparatus has the first and second steering mechanisms 8 and 10 for assisting a steering force exerted by a driver via the steering wheel 1. As explained below, the first steering mechanism 8 employs an electric motor to apply a torque to the pinion shaft 6 and the second steering mechanism 10 employs hydraulic pressure to apply a thrusting force against the rack bar 5. With this proposed steering control apparatus, the second steering mechanism 10 is configured to use hydraulic pressure to thrust the rack bar 5 in an axial direction that does not cause twisting of the rack bar 5. As a result, there is no impairment of the meshing between the pinion shaft 6 and the rack bar 5, and thus transmission loss does not occur when a steering assist force is transmitted between the pinion shaft 6 and the rack bar 5.

The first steering shaft 3 is linked to the steering wheel 1. The steering angle sensor 4 is provided on the first steering shaft 3 and is configured to detect a steering angle of the steering wheel 1. The rack bar 5 is coupled to the steered wheels 2L and 2R. The rack bar 5 has a set of rack teeth extending along a prescribed axial range of rack bar 5 to form a rack gear 5a. The pinion shaft 6 has a set of pinion teeth that form a pinion gear 6a The pinion gear 6a meshes with the rack gear 5a. The pinion gear 6a and the rack gear 5a form a rack and pinion mechanism. The pinion shaft 6 is linked to the rack bar 5 through the pinion gear 6a. The second steering shaft 7 is linked to the rack bar 5 through the pinion shaft 6. The first steering mechanism 8 is linked to the pinion shaft 6. The first steering mechanism 8 is configured to generate a steering force by applying a rotational torque to the pinion shaft 6 based on a detection value from the steering angle sensor 4. The steered wheel angle sensor 9 is provided on the pinion shaft 6. The steered wheel angle sensor 9 is configured to detect a steered angle (actual steered wheel angle) of the steered wheels 2L and 2R. The second steering mechanism 10 is linked to the rack bar 5. The second steering mechanism 10 is configured to generate a steering force by exerting a thrusting force against the rack bar 5 based on a detection value from the steering angle sensor 4. The clutch 11 connects the first steering shaft 3 to the second steering shaft 7 when at least one of the first and second steering mechanisms 8 and 10 fails. In other words, in the steering control apparatus of this illustrated embodiment, the clutch 11 serves as a failsafe power connecting/disconnecting mechanism.

A reaction force generating motor 13 is connected to the first steering shaft 3 through a gear reduction mechanism having a prescribed reduction ratio. The reaction force generating motor 13 is connected to the steering angle sensor 4 through a pseudo reaction force control device 12 arranged to communicate reciprocally with a first steering force control device 19 and a second steering force control device 23 (described later). The reaction force generating motor 13 and the reduction mechanism constitute a reaction force actuator. A torque sensor 14 is also provided on the first steering shaft 3, and serves to detect a steering torque imparted from the steering wheel 1. Information detected by the torque sensor 14 is fed to the pseudo reaction force control device 12, and used in a calculation of a pseudo steering reaction force (explained later).

The reaction force generating motor 13 is controlled by the pseudo reaction force control device 12 based on detection values from the steering angle sensor 4 and the torque sensor 14 and information from the first steering force control device 19, the second steering force control device 23, and a vehicle speed sensor 28. When the first and second steering mechanisms 8 and 10 are both functioning normally (hereinafter called "normal conditions"), i.e., when the clutch 11 is not connected, and a driver steers with the steering wheel 1, the reaction force generating motor 13 serves to apply an artificial steering reaction force to the steering wheel 1 so that the driver experiences a steering feel that is similar to that of a regular steering system (hereinafter, a "regular steering system" refers to a steering system in which the steering wheel 1 and the steered wheels 2L and 2R are mechanically linked). In short, the reaction force generating motor 13 mimics the steering reaction forces that are transmitted from the road surface to the steered wheels 2L and 2R.

The first steering mechanism 8 includes a reduction gear 15 provided on the pinion shaft 6 and a first steering force generating motor 16 that is connected to the pinion shaft 6 through the reduction gear 15. The reduction gear 15 is configured to provide a sufficient reduction ratio while occupying a limited space. The reduction gear 15 includes a worm wheel 17 and a worm shaft 18. The worm wheel 17 is provided on an outer circumferential portion of the pinion shaft 6. The worm shaft 18 is provided coaxially on a drive shaft of the first steering force generating motor 16. The reduction gear 15 is configured to reduce gear noise caused by the meshing of the worm wheel 17 with the worm shaft 18 by making the toothed portion of the worm wheel 17 out of a resin material.

The first steering force generating motor 16 is connected to the steered wheel angle sensor 9 through the first steering force control device 19 (which is arranged such that it can communicate with the other control devices 12 and 23). The first steering force generating motor 16 is controlled by the first steering force control device 19 based on a detection value from the steered wheel angle sensor 9 and information from the other control devices 12 and 23 (e.g., detection values from other sensors, such as the steering angle sensor 4). Under normal conditions, the first steering force generating motor 16 is controlled (driven) such that a steering force that is necessary and appropriate according to a driving state of the vehicle is imparted to the pinion shaft 6.

Conversely, under such abnormal conditions as when the second steering mechanism 10 (describe later) has failed and the clutch 11 is in a connected state, a torque from the first steering force generating motor 16 is used to assist a steering force imparted from the steering wheel 1. In other words, based on information from the other control devices 12 and 23 (e.g., a detection value from the torque sensor 14), the first steering force generating motor 16 is controlled (driven) such that it applies a steering assist force to the pinion shaft 6 to assist a steering force imparted from the steering wheel 1.

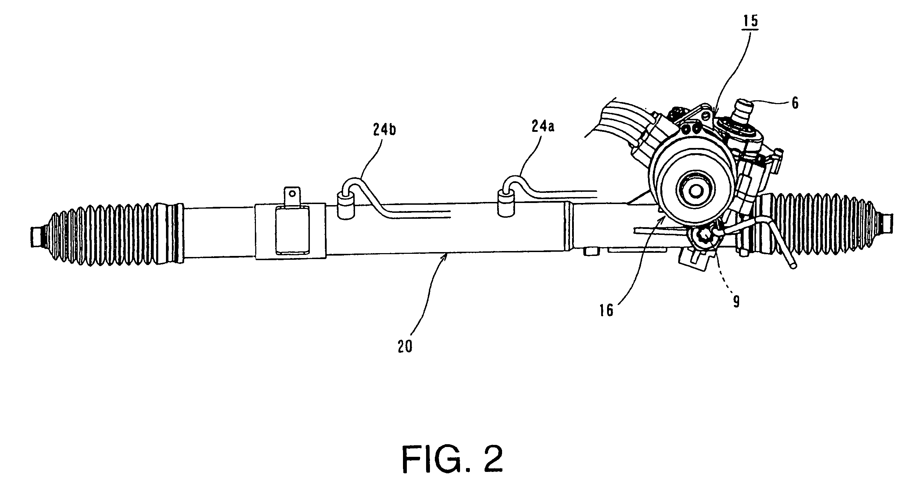

As shown in Figures 1 and 2, the steered wheel angle sensor 9 is provided on a tip end portion of the pinion shaft 6 on an opposite side of the pinion gear 6a as the reduction gear 15. The steered wheel angle sensor 9 is configured to detect an actual steered angle of the steered wheels 2L and 2R based on a rotational angle of the pinion shaft 6 from a radial direction with respect to the pinion shaft 6. The steered wheel angle sensor 9 is not limited to detecting the actual steered angle of the steered wheels 2L and 2R based on a rotational angle of the pinion shaft 6. For example, it is also acceptable to detect the actual steered angle of the steered wheels 2L and 2R based on a movement amount of the rack bar 5.

The second steering mechanism 10 includes a power cylinder 20, an oil pump 21, and a second steering force generating motor 22. The power cylinder 20 is configured to apply a trusting force against the rack bar 5 based on a pressure difference between a pair of pressure chambers P1 and P2. The oil pump 21 has a pair of outlets 21a and 21 b that are connected to the pressure chambers P1 and P2, respectively, through pipes 24a and 24b. The oil pump 21 is a well-known reversible pump arranged to selectively deliver operating oil to the pressure chamber P1 or the pressure chamber P2 by rotating in a forward or reverse direction. The second steering force generating motor 22 serves to drive and control the oil pump 21.

The power cylinder 20 includes a circular cylinder tube 20a and a piston 20b. The circular cylinder tube 20a is arranged to surround the rack bar 5 from the outside. The piston 20b is attached onto an outside circumference of the rack bar 5. The piston 20b divides the space inside the cylinder tube 20a into two separate chambers, i.e., the pressure chambers P1 and P2.

The second steering force generating motor 22 is connected to the second steering force control device 23, which is arranged such that it can communicate with the other control devices 12 and 19. The second steering force generating motor 22 is controlled by the second steering force control device 23 based on information from the other control devices 12 and 19. By rotationally driving the oil pump 21, the second steering force generating motor 22 functions to create a pressure difference between the pressure chambers P1 and P2 of the power cylinder 20 and thereby applies a thrusting force against the rack bar 5. Under normal conditions, the thrusting force is applied to the rack bar 5 as a steering assist force for assisting a steering force applied by the first steering mechanism 8 based on information from the other control devices 12 and 23 (e.g., a detection value from the torque sensor 14).

Meanwhile, under abnormal conditions in which the first steering mechanism 8 has failed and the clutch 11 is connected, a steering assist force based on a pressure difference between the pressure chambers P1 and P2 is used to assist a steering force imparted from the steering wheel 1.

A resolver (not shown) serving as a motor rotational angle sensor for detecting a rotational angle of the steering force generating motor 16 is provided inside the steering force generating motor 16. An output signal from the resolver indicating a detected rotational angle of the motor 16 is fed to the first steering force control device 19 and used to drive/control the motor 16.

A communication passage 24c serves to allow direct fluid communication between the pressure chambers P1 and P2. The communication passage 24c is arranged between the pipes 24a and 24b of the second steering mechanism 10, and a failsafe valve 25 is provided in the communication passage 24c. In an emergency situation, e.g., when the second steering force generating motor 22 fails, the second steering force control device 23 opens the failsafe valve 25 such that the pressure chambers P1 and P2 fluidly communicate with each other.

The operation of a steering control apparatus according to this embodiment will now be explained based on Figure 1. Under normal conditions, the clutch 11 is not connected and rotation of the first steering shaft 3 is not directly transmitted to the second steering shaft 7. Instead, a rotational angle of the first steering shaft 3 is detected by the steering angle sensor 4. The first steering force control device 19 then sends a control signal generated based on the detected rotational angle to the first steering force generating motor 16. The rotational torque outputted from the first steering force generating motor 16 based on the control signal is transmitted through the reduction gear 15 to the pinion shaft 6. The resulting rotation of the pinion shaft 6 causes the rack bar 5 to move in an axial direction, thereby causing the steered wheels 2L and 2R to turn based on the steering angle imparted from the steering wheel 1.

During the steering process, a steering amount of the steering wheel 1 and a steering amount outputted from the first steering mechanism 8 do not always correspond in the same manner. For example, when the vehicle is traveling at a high speed and a large steering amount is not necessary, i.e., a large steering amount would degrade the steering feel, the first steering mechanism 8 is controlled such that the steering amount outputted there-from is decreased with respect to the steering amount of the steering wheel 1. Conversely, when the vehicle is being parked or otherwise traveling at a slow speed and a large steering amount is necessary, the first steering mechanism 8 is controlled such that the steering amount outputted there-from is increased with respect to the steering amount of the steering wheel 1.

When the first steering mechanism 8 is operating normally, the second steering mechanism 10 also operates in an assisting role. Specifically, the second steering force generating motor 22 is controlled by the second steering force control device 23 based on information from the other control devices 12 and 19 (e.g., a detection result from the steering angle sensor 4) so as to drive the oil pump 21 and create a pressure difference between the pressure chambers P1 and P2 (e.g., when the rack bar 5 is to be moved rightward from the perspective of Figure 1, operating oil is supplied to the pressure chamber P2). Based on the pressure difference, the piston 20b applies a trusting force to the rack bar 5 and assists the steering force outputted from the first steering mechanism 8.

However, the second steering mechanism 10 is not always operating when the first steering mechanism 8 is operating normally. For example, the second steering mechanism 10 stops when the vehicle is traveling at a high speed and steering force assistance is not necessary. Conversely, when the vehicle is traveling at a low speed and steering force assistance is necessary, the second steering mechanism 10 operates and delivers the necessary steering force assistance.

When one or both of the steering mechanisms 8 and 10 fails, the clutch 11 connects and it becomes possible for a steering force imparted from the steering wheel 1 to be transmitted directly to the pinion shaft 6. Additionally, if one of the steering mechanisms is operating normally, then that steering mechanism functions as a steering assistance device.

In this embodiment, the clutch 11 is arranged between the first steering shaft 3 and the second steering shaft 7 and functions to connect the steering shafts 3 and 7 together when an abnormal condition occurs. In this way, a driver can steer directly using the steering wheel 1 and the degree of freedom with respect to steering when an abnormal condition occurs is increased. Since the clutch 11 is connected when either one of the steering mechanisms 8 or 10 has failed instead of only when both steering mechanisms 8 and 10 have failed, the apparatus can accommodate a situation in which the steering mechanisms 8 and 10 fail separately.

When it is determined that a steering mechanism has failed, control is executed to stop the electric motor serving as the drive source for that steering mechanism. Thus, if the first steering mechanism 8 fails, then the first steering force control device 19 executes control to stop the first steering force generating motor 16 (which normally serves to apply a steering force to the pinion shaft 6). Similarly, if the second steering mechanism 10 fails, then the second steering force control device 23 executes control to stop the second steering force generating motor 22 (which normally serves to drive the oil pump 21). As a result, unnecessary operation of an electric motor of a failed steering mechanism can be prevented and excess electric power consumption can be suppressed.

With this embodiment, the second steering mechanism 10 is configured to provide a steering assistance force by creating a pressure difference between the pressure chambers P1 and P2 of the power cylinder 20 such that a thrusting force is applied to the rack bar 5 by the piston 20b. Thus, unlike the first steering mechanism 8, the second steering mechanism 10 does not cause twisting of the rack bar 5 when it applies a steering assistance force. Consequently, degradation of the meshing state between the pinion shaft 6 and the rack bar 5 does not occur and transmission loss can be prevented when a steering force is transmitted between the pinion shaft 6 and the rack bar 5. Also, since twisting of the rack bar 5 is avoided, an excess load is not produced between the meshing portions of the pinion shaft 6 and the rack bar 5 and the service life and durability of the rack and pinion mechanism can be improved.

A steering control apparatus according to this embodiment is a steer-by-wire system in which the steering wheel 1 and the steered wheels 2L and 2R are not connected by a mechanical link but are, instead, separated. As a result, steering control can be conducted freely without being completely dependent on a driver's steering. In other words, since a steering output of the pinion shaft 6 (i.e., an amount by which the steered wheels are turned) in response to a steering input (steering amount) from the steering wheel 1 can be varied, vehicle speed information (such as whether the vehicle is traveling at a high speed or is being parked) can be included as a control factor such that an appropriate steering control can be executed according to the conditions under which the vehicle is being driven.

Since the steered wheel angle sensor 9 is provided separately from the first steering mechanism 8 instead of using the to determine the steered wheel angle, even if the first steering mechanism 8 fails, the second steering mechanism 10 can continue to be controlled appropriately based on the detection output from the steered wheel angle sensor 9.

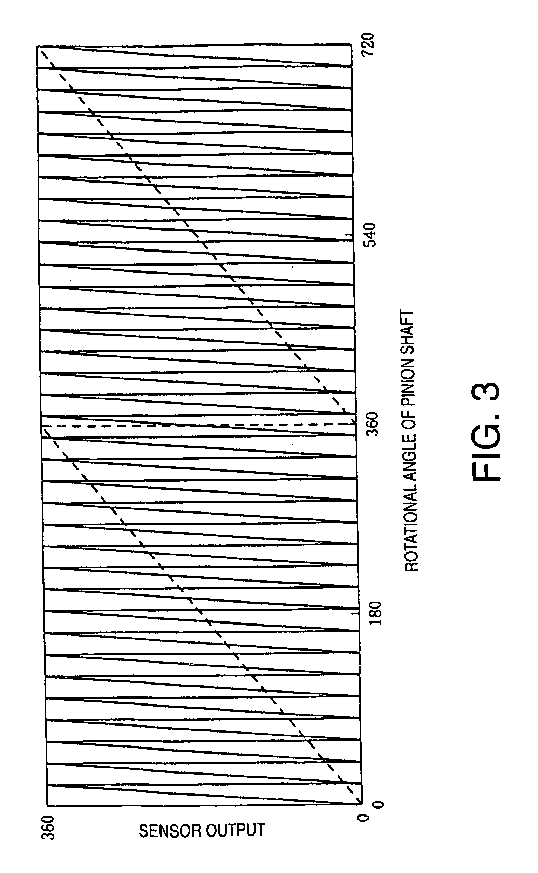

The aforementioned resolver detects the rotational angle of the first steering force generating motor 16 and the steered wheel angle sensor 9 detects the rotational angle of the pinion shaft 6 directly. Due to the reduction ratio of the reduction gear 15, the resolver detects a faster rotation than the steered wheel sensor 9. Thus, as shown in Figure 3, a period of an output signal of the resolver (shown in the figure with a solid-line curve) is shorter than a period of an output signal of the steered wheel sensor 9 (shown in the figure with a broken-line curve). In other words, the steered wheel angle sensor 9 detects fewer rotations than the resolver and produces an output signal having a longer period. As a result, the computational load associated with computing an actual steered wheel angle of the steered wheels 2L and 2R based on a rotational angle of the pinion shaft 6 can be reduced by using the steered wheel angle sensor 9 to detect the rotational angle of the pinion shaft 6 instead of using the resolver.

Regarding providing a steered wheel angle sensor 9 on the pinion shaft 6, the steered wheel angle sensor 9 is positioned on a tip end portion of the pinion shaft 6 on the opposite side of the pinion gear 6a as the reduction gear 15. As a result, the steered angle sensor 9 does not interfere with the reduction gear 15 and the degree of freedom with respect to the arrangement of the steered wheel angle sensor 9 can be increased.

Although in this embodiment the steered wheel angle sensor 9 is configured to detect the rotational angle of the pinion shaft 6 from a radial direction, it is also possible to arrange the steered wheel angle sensor 9 on a tip end of the pinion shaft 6 such that it detects the rotational angle of the pinion shaft 6 from a thrust direction. Such an arrangement would enable the steered wheel angle sensor 9 to be made even smaller.

Since the control apparatuses 12, 19, and 23 are independent units, steering control can be continued even if one of the steering mechanisms 8 or 10 fails or if one of the control devices 12, 19, or 23 fails.

Since the control devices 12, 19, and 23 can communicate with one another and compare one another's output signals, the control devices 12, 19, and 23 can determine if one of the control devices 12, 19, or 23 has failed by using a "simple majority vote" among the control devices 12, 19, and 23. In this way, failures can be detected with a higher degree of accuracy and the reliability of the steering control apparatus can be improved.

In the second steering mechanism 10, communication between the pressure chambers P1 and P2 of the power cylinder 20 can be allowed or prohibited by the failsafe valve 25. By contriving the failsafe valve 25 to allow communication between the pressure chambers P1 and P2 when the second steering mechanism 10 fails, the operating oil can be allowed to move between the pressure chambers P1 and P2 without passing through the oil pump 21. As a result, the inertia effects of the oil pump 21 can be avoided and a fluid resistance of the operating oil can be decreased, enabling the operating oil to move smoothly between the pressure chambers P1 and P2.

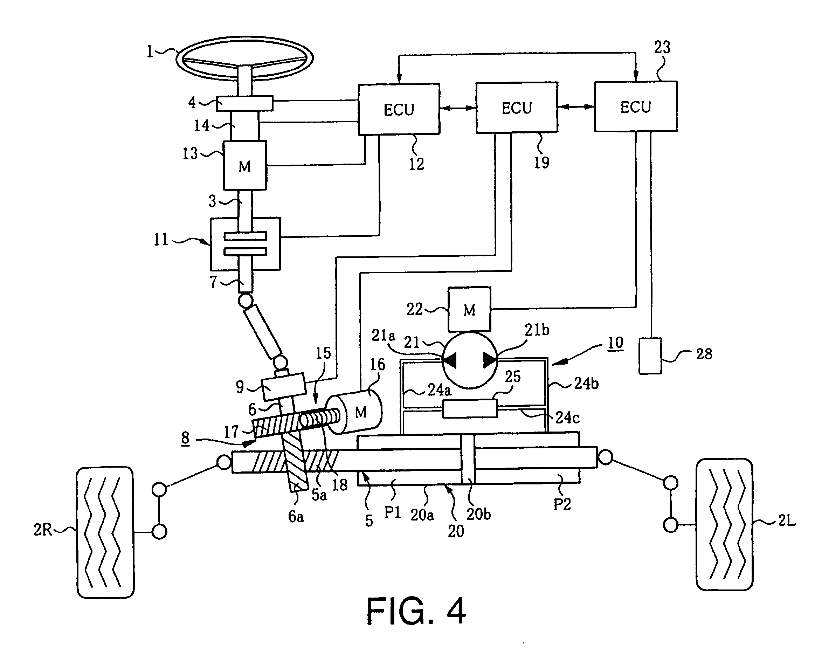

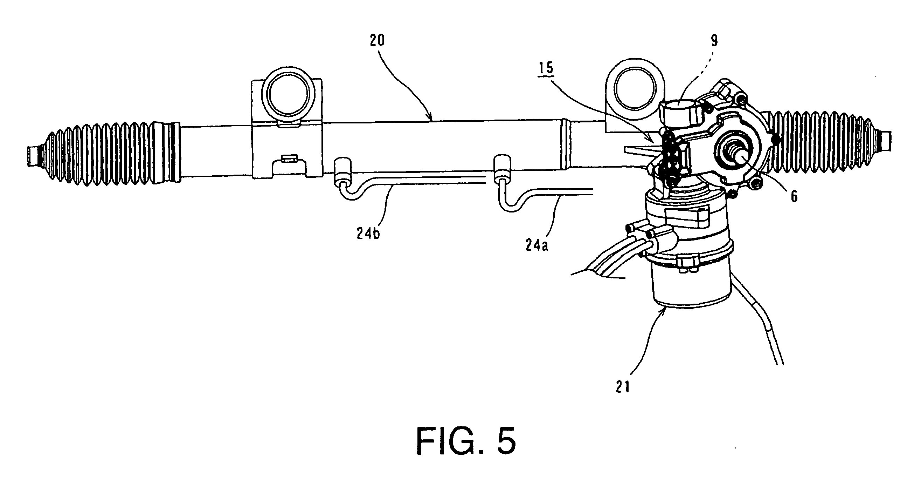

Figures 4 and 5 show a steering control apparatus according to a second embodiment. The second embodiment is basically the same as the first embodiment, except that the arrangement of the steered wheel angle sensor 9 on the pinion shaft 6 has been changed. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment have been omitted for the sake of brevity.

In this embodiment, the steered wheel angle sensor 9 is arranged on the pinion shaft 6 in a position above the reduction gear 15 on the same side of the pinion gear 6a as the reduction gear 15. Similarly to the first embodiment, the steered wheel angle sensor 9 detects the rotational angle of the pinion shaft 6 from a radial direction.

With this embodiment, since the steered wheel angle sensor 9 is arranged on the same side as the reduction gear 15, parts that protrude radially outward from the pinion shaft 6 can be concentrated into a smaller region and such that the size of the portion of the pinion shaft 6 around which a larger space is occupied can be held to a minimum. In other words, a portion near the tip end of the pinion shaft 6 can be prevented from being enlarged due to additional parts.

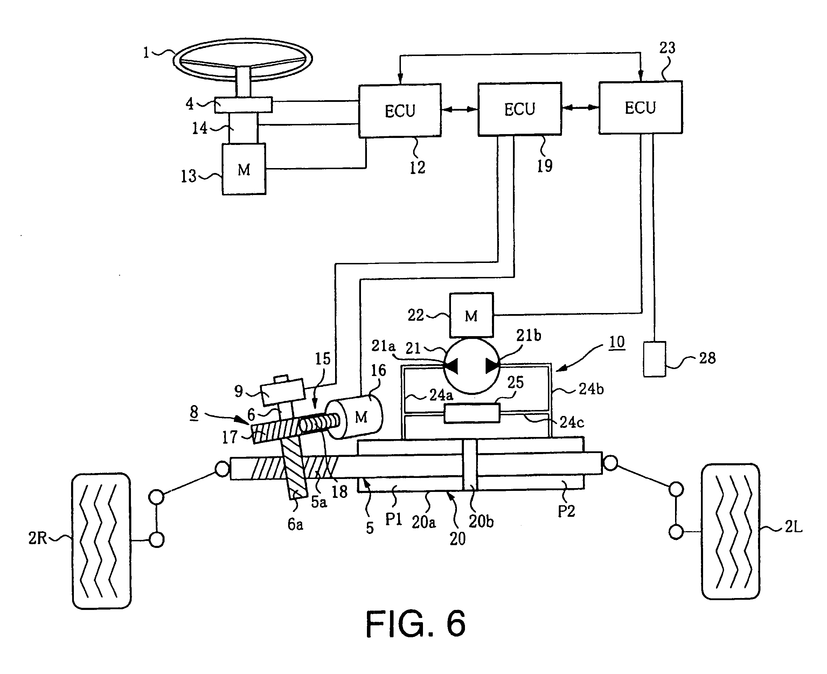

Figure 6 shows a steering control apparatus according to a third embodiment. The third embodiment is basically the same as the second embodiment, except that the clutch 11 of the second embodiment has been eliminated. In view of the similarity between the third embodiment and the prior embodiments, the parts of the third embodiment that are identical to the parts of the prior embodiment will be given the same reference numerals as the parts of the prior embodiment. Moreover, the descriptions of the parts of the third embodiment that are identical to the parts of the prior embodiment have been omitted for the sake of brevity.

With this embodiment, the operational effects obtained with the third embodiment are basically the same as with the second embodiment except that the failsafe function provided by connecting a clutch 11 during abnormal situations is not obtained with the third embodiment.

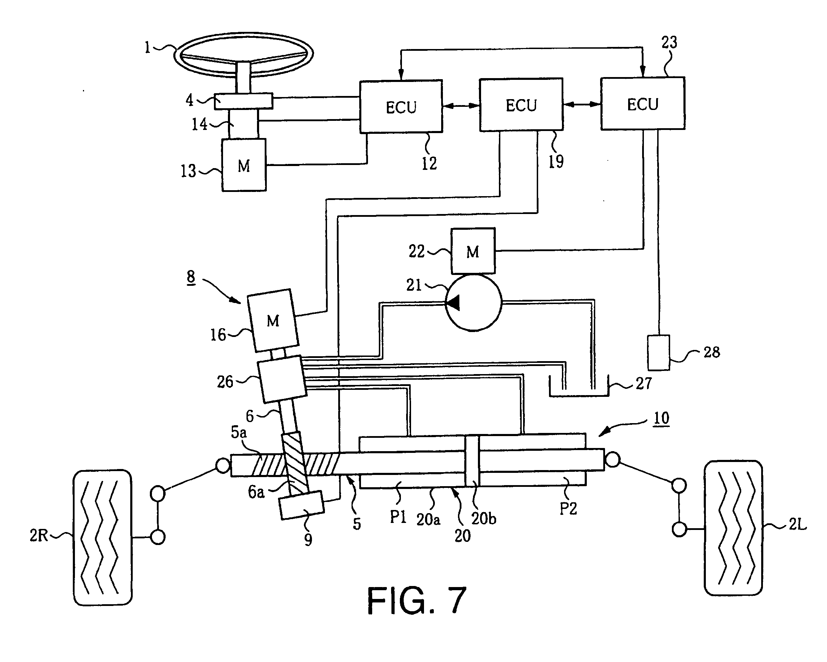

Figure 7 shows a steering control apparatus according to a fourth embodiment. The fourth embodiment is basically the same as the first embodiment except for a few differences. In view of the similarity between the fourth embodiment and the prior embodiments, the parts of the fourth embodiment that are identical to the parts of the prior embodiment will be given the same reference numerals as the parts of the prior embodiment. Moreover, the descriptions of the parts of the fourth embodiment that are identical to the parts of the prior embodiment have been omitted for the sake of brevity.

First in this fourth embodiment, the clutch 11 has been omitted. Second in this fourth embodiment, in the first steering mechanism 8, the reduction gear 15 has been omitted and the first steering force generating motor 16 is arranged to drive (rotate) the pinion shaft 6 directly. Thirdly, in the second steering mechanism 10, the oil pump 21 is changed from a two-way pump to a one-way pump and operating oil pumped from the one-way pump is selectively supplied to the pressure chambers P1 and P2 of the power cylinder 20 by a well-known rotary valve 26 like that presented in Japanese Laid-Open Patent Publication No. H05-42880, particularly in Figures 4 and 5 thereof.

Thus, in this embodiment, a second steering shaft 7 is arranged to be driven (rotated) by the first steering force generating motor 16 and the second steering shaft 7 and the pinion shaft 6 are coupled together with a torsion bar (not shown) such that they can rotated relative to each other. When the second steering shaft 7 is rotated by the first steering force generating motor 16, the torsion bar is twisted and the pinion shaft 6 rotates following the second steering shaft 7 through an elastic force of the torsion bar.

The rotary valve 26 is formed by an overlapping of the second steering shaft 7 and the pinion shaft 6. Depending on the rotational direction of the second steering shaft 7, one of the pressure chambers P1 or P2 is connected to the outlet of the oil pump 21 and the other pressure chamber is connected to a reservoir tank 27 arranged and configured to store operating oil. A valve opening amount of the valve 26 varies depending on a torque generated during steering, i.e., an amount of relative rotation between the second steering shaft 7 and the pinion shaft 6, and the variation of the valve opening amount controls the amount of operating oil supplied to or discharged from the pressure chambers P1 and P2.

The operation of a steering control apparatus according to this embodiment will now be explained based on Figure 7. In a steering control apparatus according to this embodiment, when the steering wheel 1 is rotated, the first steering shaft 3 rotates integrally with the steering wheel 1 and the rotational angle of the first steering shaft 3 detected by the steering angle sensor 4. Based on the detected rotational angle, a control signal is sent from the first steering force control device 19 to the first steering force generating motor 16. The rotational torque outputted from the first steering force generating motor 16 based on the control signal is transmitted through the torsion bar to the pinion shaft 6. The resulting rotation of the pinion shaft 6 causes the rack bar 5 to move in an axial direction, thereby causing the steered wheels 2L and 2R to turn based on the steering angle imparted from the steering wheel 1.

In this embodiment, too, a steering amount of the steering wheel 1 and a steering amount outputted from the first steering mechanism 8 do not always correspond in the same manner. For example, when the vehicle is traveling at a high speed and a large steering amount is not necessary, i.e., a large steering amount would degrade the steering feel, the first steering mechanism 8 is controlled such that the steering amount outputted there-from is decreased with respect to the steering amount of the steering wheel 1. Conversely, when the vehicle is being parked or otherwise traveling at a slow speed and a large steering amount is necessary, the first steering mechanism 8 is controlled such that the steering amount outputted there-from is increased with respect to the steering amount of the steering wheel 1.

In this embodiment, during steering, the rotary valve 26 opens in accordance with a relative rotation amount between the second steering shaft 7 (which is rotationally driven by the first steering force generating motor 16) and the pinion shaft 6 (which follows the second steering shaft 7). Thus, an oil pressure corresponding to the opening amount of the rotary valve 26 acts on the pressure chamber P1 or the pressure chamber P2, and which pressure chamber P1 or P2 receives the oil pressure depends on the direction in which the second steering shaft 7 rotates. A thrusting force serving as a steering assist force acts on the rack bar 5 based on the resulting pressure difference. In this way, in this embodiment, the second steering mechanism 10 assists the steering force outputted from the first steering mechanism 8.

The second steering mechanism 10 can be stopped when the vehicle is traveling at a high speed and steering force assistance is not necessary and, conversely, can deliver the necessary steering force assistance when the vehicle is traveling at a low speed and steering force assistance is necessary.

In this embodiment, the second steering mechanism 10 is configured to provide a steering assistance force by creating a pressure difference between the pressure chambers P1 and P2 of the power cylinder 20 such that a thrusting force is applied to the rack bar 5 by the piston 20b. Thus, unlike the first steering mechanism 8, the second steering mechanism 10 does not cause twisting of the rack bar 5 when it applies a steering assistance force. Consequently, degradation of the meshing state between the pinion shaft 6 and the rack bar 5 does not occur and transmission loss can be prevented when a steering force is transmitted between the pinion shaft 6 and the rack bar 5. Also, since twisting of the rack bar 5 is avoided, an excess load is not produced between the meshing portions of the pinion shaft 6 and the rack bar 5 and the service life and durability of the rack and pinion mechanism can be improved. Other than the failsafe function provided by connecting the clutch 11 when an abnormal condition occurs and the operational effects provided by the reduction gear 15, this embodiment provides the same effects as the first embodiment.

### GENERAL INTERPRETATION OF TERMS

The present invention is not limited to the constituent features of embodiments described heretofore. For example, the invention is not limited to a steer-by-wire steering system and can be applied to a conventional steering system. Also, the manner in which the first steering mechanism 8 and the second steering mechanism 10 are controlled can be changed as appropriate depending on the specifications of the vehicle in which the invention is being used.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment(s), the following directional terms "forward", "rearward", "above", "downward", "vertical", "horizontal", "below" and "transverse" as well as any other similar directional terms refer to those directions of a vehicle equipped with the steering control apparatus. Accordingly, these terms, as utilized to describe the steering control apparatus should be interpreted relative to a vehicle equipped with the steering control apparatus. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function, unless otherwise specified.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A steering control apparatus comprising:
a steering wheel (1);
a rack bar (5) operatively connected to a steered wheel to turn the steered wheel;
a pinion shaft (6) operatively connected to the rack bar (5) to form a rack and pinion mechanism;
a first steering mechanism (8) including a first electric motor arranged to apply a rotational torque to the pinion shaft for turning the steered wheel;
a second steering mechanism (10) including a hydraulic power cylinder that applies a thrusting force to the rack bar for turning the steered wheel, and an oil pump fluidly connected to the power cylinder, and a second electric motor that drives the oil pump;
a detection device (4, 14) operatively connected to the steering wheel such that the detection device detects steering information of the steering wheel; and
a motor control device (19) that controls the first and second electric motors based on a detection signal from the detection device,
**characterized in that**
the steering wheel and the steered wheel are mechanically isolated from each other, the detecting device (4) is arranged to detect a steering amount of the steering wheel (1); and
the motor control device (19) further controls the first and second electric motors based on a detection value indicating the steering amount.

2. The steering control apparatus of claim 1, further comprising
a first steering shaft (3) connected to the steering wheel;
a second steering shaft (7) connected to the pinion shaft; and
a power connecting/disconnecting mechanism arranged between the first steering shaft and the second steering shaft for connecting and disconnecting a transmission of power from the first steering shaft (3) to the second steering shaft (7), the power connecting/disconnecting mechanism connecting the first and second steering shafts (3, 7) together in response to a determination that at least one of the first and the second steering mechanisms has failed.

3. The steering control apparatus of claim 2, wherein
the power cylinder (20) includes a pair of pressure chambers (P1, P2), and
the oil pump (21) is connected to the pressure chambers to selectively deliver operating oil to the pressure chambers.

4. The steering control apparatus of claim 3, wherein
the oil pump (21) is a reversible pump.

5. The steering control apparatus of claim 3, wherein
the oil pump (21) is a one-way pump.

6. The steering control apparatus of claim 3, wherein
the second steering mechanism (10) includes a failsafe valve (25) that switches between establishing and prohibiting fluid communication between the two pressure chambers; and
the failsafe valve (25) establishes fluid communication between the two pressure chambers in response to a determination that the second steering mechanism has failed.

7. The steering control apparatus of claim 6, wherein
the motor control device (19) stops the second electric motor in response to a determination that the second steering mechanism has failed.

8. The steering control apparatus of claim 1, further comprising
a reduction gear (15) operatively disposed between the first electric motor and the pinion shaft, with the first electric motor being configured to apply a rotational torque to the pinion shaft through the reduction gear.

9. The steering control apparatus of claim 8, further comprising
a steered wheel angle sensor (9) provided on the pinion shaft to detect a steered angle of the steered wheel, with steered wheel angle sensor being arranged on an opposite side of the rack from the reduction gear, and the motor control device further controlling the first and second electric motors based on the detection signal from the detection device and a detected steered wheel angle from the steered wheel angle sensor.

10. The steering control apparatus of claim 8, further comprising
a steered wheel angle sensor (9) provided on the pinion shaft to detect a steered angle of the steered wheel, with the steered wheel angle sensor being arranged on a side of the rack that includes the reduction gear, and the motor control device further controlling the first and second electric motors based on the detection signal from the detection device and a detected steered wheel angle from the steered wheel angle sensor.

11. The steering control apparatus of claim 1, wherein
the motor control device (19) further controls the first electric motor such that a rotational torque that is appropriate according to an operating condition of a vehicle is applied to the pinion shaft, and the motor control device further controls the second electric motor such that a steering assist force serving to assist a steering force applied by the first steering mechanism is applied to the rack bar.

12. The steering control apparatus of claim 1, further comprising
a vehicle speed sensor (28) that detects a vehicle speed, with the motor control device stopping a driving force of the second electric motor and only driving the first electric motor when a vehicle speed detected by the vehicle speed sensor is equal to or larger than a prescribed value.

## Patentansprüche

1. Lenkungssteuervorrichtung, umfassend:
ein Lenkrad (1),
eine Zahnstange (5), die mit einem gelenkten Rad verbunden ist, um das gelenkte Rad zu drehen;
eine Ritzelwelle (6), die mit der Zahnstange (5) verbunden ist, um einen Zahnstangenmechanismus zu bilden;
eine erste Lenkeinrichtung (8) mit einem ersten Elektromotor, der ein Drehmoment auf die Ritzelwelle aufbringt, um das gelenkte Rad zu drehen;
eine zweite Lenkeinrichtung (10) mit einem hydraulischen Kraftzylinder, der eine Schubkraft auf die Zahnstange aufbringt, um das gelenkte Rad zu drehen, und einer Ölpumpe, die fluidisch mit dem Kraftzylinder verbunden ist, und einem zweiten Elektromotor, der die Ölpumpe antreibt;
eine Erfassungsvorrichtung (4, 14), die mit dem Lenkrad verbunden ist, so dass die Erfassungsvorrichtung Lenkinformationen des Lenkrads erfasst; und
eine Motorsteuervorrichtung (19), die den ersten und den zweiten Elektromotor auf der Grundlage eines Erfassungssignals von der Erfassungsvorrichtung steuert,
**dadurch gekennzeichnet, dass**
das Lenkrad und das gelenkte Rad mechanisch voneinander isoliert sind, die Erfassungsvorrichtung (4) einen Lenkbetrag des Lenkrads (1) erfasst; und
die Motorsteuervorrichtung (19) ferner den ersten und den zweiten Elektromotor auf der Grundlage eines Erfassungswerts, der den Lenkbetrag anzeigt, steuert.

2. Lenkungssteuervorrichtung nach Anspruch 1, ferner umfassend:
eine erste Lenkwelle (3), die mit dem Lenkrad verbunden ist;
eine zweite Lenkwelle (7), die mit der Ritzelwelle verbunden ist; und
eine Kraftverbindungs- und Trennungseinrichtung, die zwischen der ersten Lenkwelle und der zweiten Lenkwelle angeordnet ist, um eine Kraftübertragung von der ersten Lenkwelle (3) zur zweiten Lenkwelle (7) herzustellen oder zu verhindern, wobei die Kraftverbindungs- und Trennungseinrichtung die erste Lenkwelle (3) und die zweite Lenkwelle (7) in Reaktion auf eine Bestimmung, dass zumindest eine der ersten oder zweiten Lenkeinrichtung ausgefallen ist, verbindet.

3. Lenkungssteuervorrichtung nach Anspruch 2, wobei
der Kraftzylinder (20) ein Paar von Druckkammern (P1, P2) umfasst, und
die Ölpumpe (21) mit den Druckkammern verbunden ist, um wahlweise Betriebsöl zu den Druckkammern zuzuführen.

4. Lenkungssteuervorrichtung nach Anspruch 3, wobei die Ölpumpe (21) eine Umkehrpumpe ist.

5. Lenkungssteuervorrichtung nach Anspruch 3, wobei die Ölpumpe (21) eine Einwegpumpe ist.

6. Lenkungssteuervorrichtung nach Anspruch 3, wobei
die zweite Lenkeinrichtung (10) ein ausfallsicheres Ventil (25) umfasst, das zwischen einem Herstellen und einem Verhindern einer Fluidverbindung zwischen den zwei Druckkammern umschaltet; und
das ausfallsichere Ventil (25) eine Fluidverbindung zwischen den zwei Druckkammern in Reaktion auf eine Bestimmung, dass die zweite Lenkeinrichtung ausgefallen ist, herstellt.

7. Lenkungssteuervorrichtung nach Anspruch 6, wobei die Motorsteuervorrichtung (19) den zweiten Elektromotor in Reaktion auf eine Bestimmung, dass die zweite Lenkeinrichtung ausgefallen ist, stoppt.

8. Lenkungssteuervorrichtung nach Anspruch 1, ferner umfassend ein Untersetzungsgetriebe (15), das zwischen dem ersten Elektromotor und der Ritzelwelle angeordnet ist, wobei der erste Elektromotor über das Untersetzungsgetriebe ein Drehmoment auf die Ritzelwelle aufbringt.

9. Lenkungssteuervorrichtung nach Anspruch 8, ferner umfassend einen Winkelsensor (9) für das gelenkte Rad, der auf der Ritzelwelle vorgesehen ist, um einen Lenkwinkel des gelenkten Rads zu erfassen, wobei der Winkelsensor für das gelenkte Rad auf einer gegenüberliegenden Seite der Zahnstange vom Untersetzungsgetriebe angeordnet ist, und die Motorsteuervorrichtung ferner den ersten und den zweiten Elektromotor auf der Grundlage des Erfassungssignals von der Erfassungsvorrichtung und eines erfassten Winkels des gelenkten Rads vom Winkelsensor für das gelenkte Rad steuert.

10. Lenkungssteuervorrichtung nach Anspruch 8, ferner umfassend einen Winkelsensor (9) für das gelenkte Rad, der auf der Ritzelwelle vorgesehen ist, um einen Lenkwinkel des gelenkten Rads zu erfassen, wobei der Winkelsensor für das gelenkte Rad auf einer Seite der Zahnstange, die das Untersetzungsgetriebe umfasst, angeordnet ist, und die Motorsteuervorrichtung ferner den ersten und den zweiten Elektromotor auf der Grundlage des Erfassungssignals von der Erfassungsvorrichtung und eines erfassten Winkels des gelenkten Rads vom Winkelsensor für das gelenkte Rad steuert.

11. Lenkungssteuervorrichtung nach Anspruch 1, wobei die Motorsteuervorrichtung (19) ferner den ersten Elektromotor so steuert, dass ein Drehmoment, das gemäß einer Betriebsbedingung eines Fahrzeugs angemessen ist, auf die Ritzelwelle aufgebracht wird, und die Motorsteuervorrichtung ferner den zweiten Elektromotor so steuert, dass eine Lenkhilfskraft, die zum Unterstützen einer Lenkkraft, die von der ersten Lenkeinrichtung aufgebracht wird, dient, auf die Zahnstange aufgebracht wird.

12. Lenkungssteuervorrichtung nach Anspruch 1, ferner umfassend einen Fahrzeuggeschwindigkeitssensor (28), der eine Fahrzeuggeschwindigkeit erfasst, wobei die Motorsteuervorrichtung eine Antriebskraft des zweiten Elektromotors stoppt und nur den ersten Elektromotor antreibt, wenn eine vom Fahrzeuggeschwindigkeitssensor erfasste Fahrzeuggeschwindigkeit gleich oder größer als ein vorbestimmter Wert ist.

## Revendications

1. Dispositif de commande de direction comprenant :
un volant (1) ;
une barre de crémaillère (5) raccordée de manière opérationnelle à une roue directrice pour faire tourner la roue directrice ;
un arbre de pignon (6) raccordé de manière opérationnelle à la barre de crémaillère (5) afin de former un mécanisme à crémaillère ;
un premier mécanisme de direction (8) comprenant un premier moteur électrique agencé pour appliquer une force de rotation sur l'arbre de pignon afin de faire tourner la roue directrice ;
un deuxième mécanisme de direction (10) comprenant un vérin d'assistance hydraulique qui applique une force de poussée sur la barre de crémaillère pour faire tourner la roue directrice, et une pompe à huile raccordée au vérin d'assistance, et un deuxième moteur électrique qui entraîne la pompe à huile ;
un dispositif de détection (4, 14) raccordé de manière opérationnelle au volant de sorte que le dispositif de détection détecte l'information de direction du volant ; et
un dispositif de commande de moteur (19) qui commande les premier et deuxième moteurs électriques en fonction d'un signal de détection provenant du dispositif de détection,
**caractérisé en ce que** :
le volant et la roue directrice sont mécaniquement isolés l'un de l'autre, le dispositif de détection (4) est agencé pour détecter une quantité de direction du volant (1) ; et
le dispositif de commande de moteur (19) commande en outre les premier et deuxième moteurs électriques en fonction d'une valeur de détection indiquant la quantité de direction.

2. Dispositif de commande de direction selon la revendication 1, comprenant en outre :
un premier arbre de direction (3) raccordé au volant ;
un deuxième arbre de direction (7) raccordé à l'arbre de pignon ; et
un mécanisme de connexion/déconnexion de puissance agencé entre le premier arbre de direction et le deuxième arbre de direction pour connecter et déconnecter une transmission de puissance du premier arbre de direction (3) au deuxième arbre de direction (7), le mécanisme de connexion/déconnexion de puissance raccordant les premier et deuxième arbres de direction (3, 7) ensemble en réponse à une détermination qu'au moins l'un parmi les premier et deuxième mécanismes de direction est en panne.

3. Dispositif de commande de direction selon la revendication 2, dans lequel :
le vérin d'assistance (20) comprend une paire de chambres de pression (P1, P2), et
la pompe à huile (21) est raccordée aux chambres de pression pour délivrer sélectivement de l'huile de travail aux chambres de pression.

4. Dispositif de commande de direction selon la revendication 3, dans lequel la pompe à huile (21) est une pompe réversible.

5. Dispositif de commande de direction selon la revendication 3, dans lequel la pompe à huile (21) est une pompe à une voie.

6. Dispositif de commande de direction selon la revendication 3, dans lequel :
le deuxième mécanisme de direction (10) comprend une soupape automatique de sécurité (25) qui passe de l'établissement à l'interdiction de communication de fluide entre les deux chambres de pression ; et
la soupape automatique de sécurité (25) établit la communication de fluide entre les deux chambres de pression en réponse à une détermination que le mécanisme de direction est en panne.

7. Dispositif de commande de direction selon la revendication 6, dans lequel le dispositif de commande de moteur (19) arrête le deuxième moteur électrique en réponse à une détermination que le deuxième mécanisme de direction est en panne.

8. Dispositif de commande de direction selon la revendication 1, comprenant en outre un engrenage de réduction (15) disposé de manière opérationnelle entre le premier moteur électrique et l'arbre de pignon, avec le premier moteur électrique qui est configuré pour appliquer un couple de rotation sur l'arbre de pignon par le biais de l'engrenage de réduction.

9. Dispositif de commande de direction selon la revendication 8, comprenant en outre un capteur d'angle de roue directrice (9) prévu sur l'arbre de pignon pour détecter un angle directeur de la roue directrice, avec le capteur d'angle de roue directrice qui est agencé sur un côté opposé de la crémaillère de l'engrenage de réduction, et le dispositif de commande de moteur commandant en outre les premier et deuxième moteurs électriques en fonction du signal de détection provenant du dispositif de détection et un angle de roue directrice détecté provenant du capteur d'angle de roue directrice.

10. Dispositif de commande de direction selon la revendication 8, comprenant en outre un capteur d'angle de roue directrice (9) prévu sur l'arbre de pignon pour détecter un angle directeur de la roue directrice, avec le capteur d'angle de roue directrice qui est agencé sur un côté de la crémaillère qui comprend l'engrenage de réduction et le dispositif de commande de moteur commandant en outre les premier et deuxième moteurs électriques en fonction du signal de détection provenant du dispositif de détection et un angle de roue directrice détecté provenant du capteur d'angle de roue directrice.

11. Dispositif de commande de direction selon la revendication 1, dans lequel le dispositif de commande de moteur (19) commande en outre le premier moteur électrique de sorte qu'un couple de rotation qui est approprié selon une condition de fonctionnement d'un véhicule, est appliqué sur l'arbre de pignon, et le dispositif de commande de moteur commande en outre le deuxième moteur électrique de sorte qu'une force d'assistance de direction servant à assister une force de direction appliquée par le premier mécanisme de direction, est appliquée sur la barre de crémaillère.

12. Dispositif de commande de direction selon la revendication 1, comprenant en outre un capteur de vitesse de véhicule (28) qui détecte une vitesse de véhicule, avec le dispositif de commande de moteur qui arrête une force d'entraînement du deuxième moteur électrique et qui entraîne uniquement le premier moteur électrique lorsqu'une vitesse de véhicule détectée par le capteur de vitesse de véhicule est égale ou supérieure à une valeur prédéterminée.
